# EUROPEAN PATENT SPECIFICATION

(11) **EP 2 441 726 B1**
(45) Date of publication and mention of the grant of the patent: **19.11.2014**
(21) Application number: 10838366.2
(22) Date of filing: 06.09.2010
(51) Int. Cl.: B66D 1/58, B66D 3/14, G01G 19/18

(54) **HOIST**
AUFZUG
PALAN

(30) Priority: 18.08.2010 CN 201010259356
(43) Date of publication of application: 18.04.2012
(73) Proprietor: Ningbo Baoli United Imp. & Exp. Co., Ltd., Ningbo, Zhejiang 315040 (CN)
(72) Inventor: YIN, Bo, Zhejiang 315040 (CN)
(74) Representative: Cawley, Aimee Elizabeth
(86) International application number: PCT/CN2010/001344
(87) International publication number: WO 2012/022014

(56) References cited:
- CN-B- 85 106 575
- CN-U- 201 756 426
- CN-Y- 201 037 094
- CN-Y- 201 037 094
- DE-A1-102007 048 279
- DE-U1-202005 009 410
- US-A- 3 776 514
- US-A- 6 073 496

## Description

### Field of the invention

The present invention relates to a lifting equipment, in particular, to a hoist.

### Description of the Prior Art

As a lifting equipment, the hoist includes the manual hoist and motor hoist. The hoist is widely used in various fields of the national economy. However, at present, various domestic and foreign manual hoists are unable to weigh the lifted goods, due to the fact that they only have a single function of lifting. Therefore, during the process of use, the weight of the lifted goods can only be judged according to the experience of the operator, which is apt to make the hoist have overload lifting and possible to cause the damage of the equipment and the occurrence of the safety accidents, and possible to cause the unnecessary personal damage and financial loss accordingly.

### Summary of the invention

It is an object of the present invention to provide a hoist which can show the mass of the lifted goods.

For achieving the above stated object, the hoist comprises an upper hook and a holder for the upper hook, characterized in that:
the hoist also comprising a weighing device with a display which can show the weight of the upper hook bearing;
the first end of the weighing device jointed with the upper hook, while the second end of the weighing device jointed with the holder for the upper hook.

Preferably, the upper hook is rotatably jointed with the first end of the weighing device, and the second end of the weighing device is rotatably jointed with the holder for the upper hook.

Preferably, the weighing device comprises a hollow housing, in which a weighing sensor unit is mounted, the display is electrically connected with the weighing sensor unit, the hollow housing has a installing hole for the display, a metal shell covers the weighing sensor unit, the metal shell and the weighing sensor unit form a whole piece which has a lower linking portion and an upper linking portion, the lower linking portion has a first pin hole in which a first pin is moveably mounted, both ends of the first pin are fixed inside the holder for the upper hook, while the upper linking portion has a second pin hole in which the second pin is moveably mounted, both ends of the second pin are fixed inside a linking portion of the upper hook.

Preferably, the inking portion of the upper hook is in U shape.

Besides, the weighing device and the holder for the upper hook can form a whole piece through anti-vibration plates mounted on the holder, the anti-vibration plates have an installing hole for the display.

Preferably, the upper hook is moveably jointed with the whole piece which is formed by the weighing device and the holder for the upper hook.

The hoist which can display the value of the weight of lifted goods, can be applied not only in various manual hoists but also in various motor hoists.

Compared with the prior art, in this invention, a weighing device which can show the value of the weight of lifted goods, is mounted between the upper hook and the holder for the upper hook. It can avoid the possible occurrence of blind overloading due to the non-displaying of the value of the weight, and avoid the unnecessary equipment damage and even the dangerous safety accidents.

### Brief description of the drawings

FIG.1 is a perspective view of the first embodiment of the manual hoist of the present invention.
FIG.2 is an exploded view of FIG.1.
FIG.3 is a perspective view of the second embodiment of the manual hoist of the present invention.
FIG.4 is an exploded view of FIG.2.

### Detailed description of the preferred embodiment

To enable a further understanding of the innovative and technological content of the invention herein, refer to the detailed description of the invention and the accompanying drawings below:

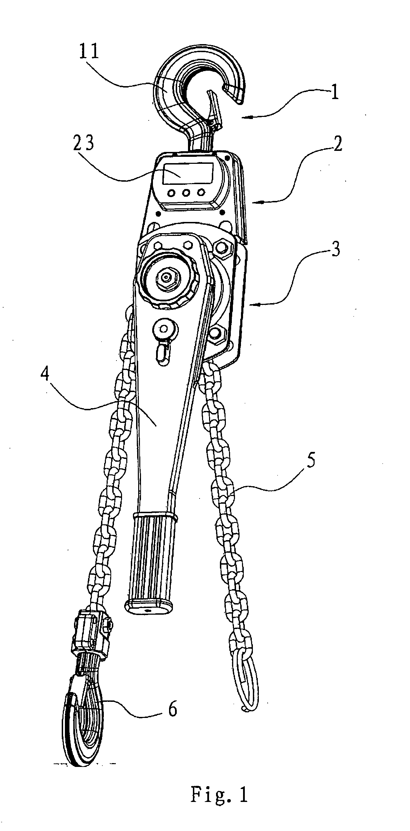

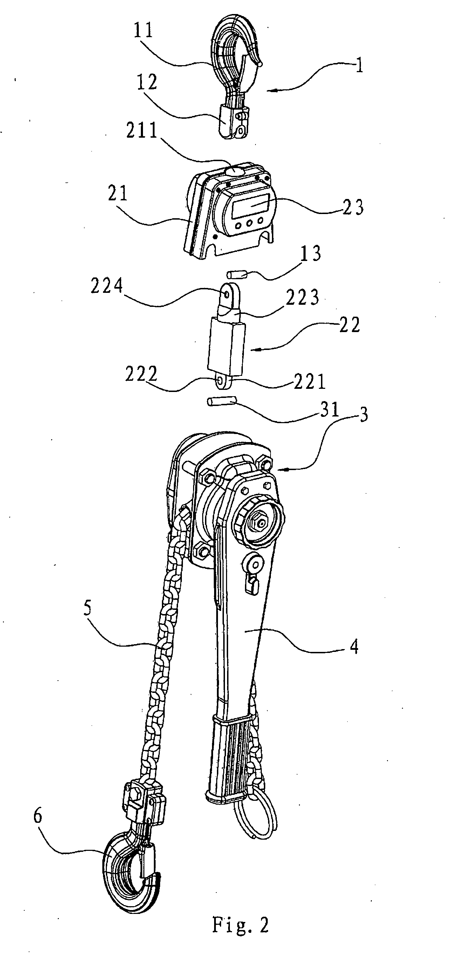

Fig.1 and Fig.2 show a manual chain hoist as the first embodiment of the present invention.

In this embodiment, the manual chain hoist comprises an upper hook 1, a weighing device 2, a machine body 3, an operating handle 4, a chain 5 and a lower hook 6. Wherein, the machine body 3 also acts as a holder for the upper hook. A gear transmission mechanism and a brake engaged with the chain are mounted inside the machine body 3. The operating handle 4 is mounted on one side of the machine body while the lower hook 6 is mounted on one side of the chain 5.

The weighing device 2 comprises a hollow housing 21, a weighing sensor unit and a display 23. A metal shell covers the weighing sensor unit, the metal shell and the weighing sensor unit form a whole piece 22 which is set in the hollow housing 21. The display 23 is electrically connected with the weighing sensor unit. The hollow housing 21 has a installing hole for the display 23.

In this embodiment, the weighing sensor unit can use the conventional electronic weighing sensor or the mechanical weighing sensor in the prior art. The weighing units can be divided into kilogram, ton, pound, newton, kilo-newton and so on according to the specific weighing sensor units.

The upper hook 1 comprises a hook portion 11 and a linking portion 12. The hook portion 11 and the linking portion 12 are jointed with each other rotatably in 360-degree. The whole part of the linking portion 12 is located inside the hollow housing 21 and the end of the linking portion 12 is in U-shape. The first end of the hollow housing 21 has a through hole 211 for the linking portion 12 to pass through moveably. The lower linking portion 221 of the whole piece 22 has a first pin hole 222 in which a first pin 31 is moveably mounted, both ends of the first pin 31 are fixed inside the holder 3 for the upper hook, while the upper linking portion 223 of the whole piece 22 has a second pin hole 224 in which the second pin 13 is moveably mounted, both ends of the second pin 13 are fixed inside the U-shaped linking portion 12 of the upper hook 1.

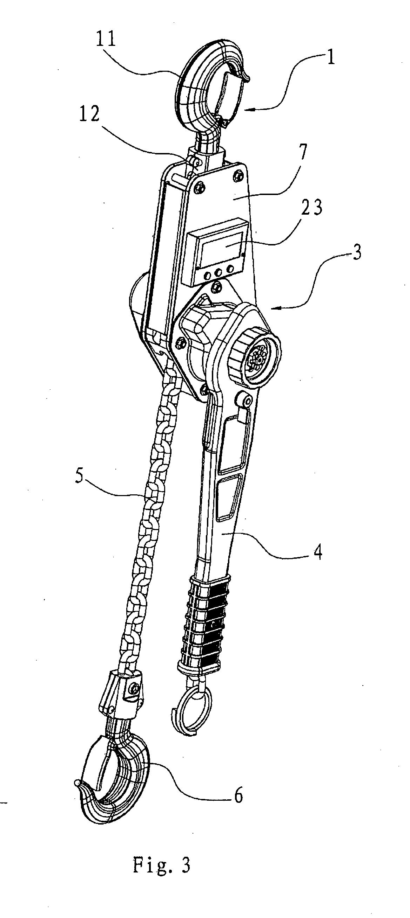

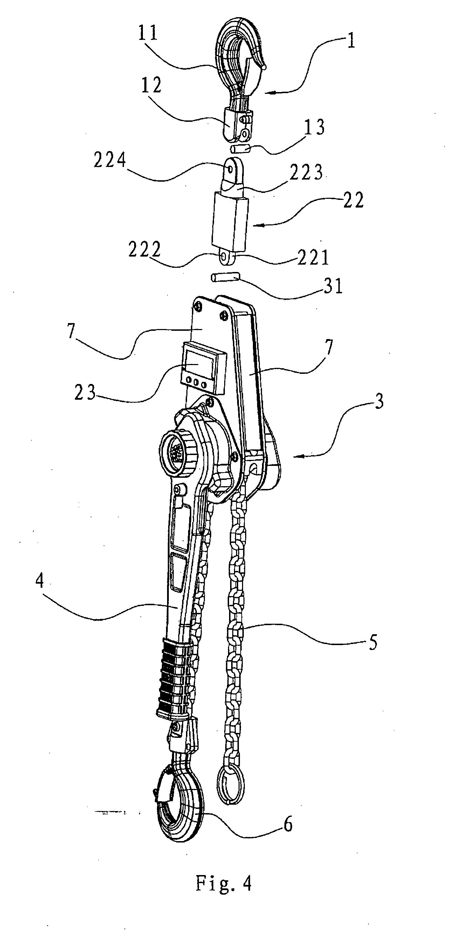

Fig.3 and Fig.4 show the second embodiment of the present invention.

The difference of this embodiment compared with the first embodiment is that the weighing device 2 is not externally equipped with a hollow housing as the first embodiment. While, the weighing device 2 and the machine body 3 are connected as an integrated part through four anti-vibration plates 7 which form into a hollow housing. The anti-vibration plates 7 have a installing hole for installing the display.

## Claims

1. A hoist, comprising an upper hook (1) and a holder (3) for the upper hook, **characterized in that**:
the hoist also comprising a weighing device (2) with a display (23) which can show the weight of the upper hook (1) bearing;
the first end of the weighing device (2) jointed with the upper hook (1), while the second end of the weighing device (2) jointed with the holder (3) for the upper hook.

2. The hoist of claim 1, wherein the upper hook (1) is rotatably jointed with the first end of the weighing device (2), and the second end of the weighing device (2) is rotatably jointed with the holder (3) for the upper hook.

3. The hoist of claim 2, wherein the weighing device (2) comprises a hollow housing (21), in which a weighing sensor unit is mounted, the display (23) is electrically connected with the weighing sensor unit, the hollow housing (21) has a installing hole for the display (23), a metal shell covers the weighing sensor unit, the metal shell and the weighing sensor unit form a whole piece (22) which has a lower linking portion (221) and an upper linking portion (223), the lower linking portion (221) has a first pin hole (222) in which a first pin (31) is moveably mounted, both ends of the first pin (31) are fixed inside the holder (3) for the upper hook, while the upper linking portion (223) has a second pin hole (224) in which the second pin (13) is moveably mounted, both ends of the second pin (13) are fixed inside a linking portion (12) of the upper hook (1).

4. The hoist of claim 3, wherein the inking portion (12) of the upper hook (1) is in U shape.

5. The hoist of claim 1, wherein the weighing device (2) and the holder (3) for the upper hook form a whole piece through anti-vibration plates (7) mounted on the holder (3), the anti-vibration plates (7) have an installing hole for the display (22).

6. The hoist of claim 5, wherein the upper hook (1) is moveably jointed with the whole piece which is formed by the weighing device (2) and the holder (3) for the upper hook.

## Patentansprüche

1. Aufzug, der einen oberen Haken (1) und einen Halter (3) für den oberen Haken aufweist, **dadurch gekennzeichnet, dass**
der Aufzug ebenfalls eine Wiegevorrichtung (2) mit einem Display (23) aufweist, das das Gewicht anzeigt, das der obere Haken (1) trägt;
wobei das erste Ende der Wiegevorrichtung (2) mit dem oberen Haken (1) verbunden ist, während das zweite Ende der Wiegevorrichtung (2) mit dem Halter (3) für den oberen Haken verbunden ist.

2. Aufzug nach Anspruch 1, bei dem der obere Haken (1) drehbar mit dem ersten Ende der Wiegevorrichtung (2) und das zweite Ende der Wiegevorrichtung (2) drehbar mit dem Halter (3) für den oberen Haken verbunden ist.

3. Aufzug nach Anspruch 2, bei dem die Wiegevorrichtung (2) ein hohles Gehäuse (21) aufweist, in dem eine Wiegesensoranlage montiert ist, wobei das Display (23) elektrisch mit der Wiegesensoranlage verbunden ist, wobei das hohle Gehäuse (21) ein Installationsloch für das Display (23) aufweist, wobei ein Metallgehäuse die Wiegesensoranlage bedeckt, wobei das Metallgehäuse und die Wiegesensoranlage ein vollständiges Teil (22) bilden, das einen unteren Verbindungsabschnitt (221) und einen oberen Verbindungsabschnitt (223) aufweist, wobei der untere Verbindungsabschnitt (221) ein erstes Stiftloch (222) aufweist, in dem ein erster Stift (31) beweglich montiert ist, wobei beide Enden des ersten Stiftes (31) innerhalb des Halters (3) für den oberen Haken befestigt sind, während der obere Verbindungsabschnitt (223) ein zweites Stiftloch (224) aufweist, in dem der zweite Stift (13) beweglich montiert ist, wobei beide Enden des zweiten Stiftes (13) innerhalb eines Verbindungsabschnittes (12) des oberen Hakens (1) befestigt sind.

4. Aufzug nach Anspruch 3, bei dem der Verbindungsabschnitt (12) des oberen Hakens (1) in U-Form vorliegt.

5. Aufzug nach Anspruch 1, bei dem die Wiegevorrichtung (2) und der Halter (3) für den oberen Haken ein vollständiges Teil mittels Antivibrationsplatten (7) bilden, die am Halter (3) montiert sind, wobei die Antivibrationsplatten (7) ein Installationsloch für das Display (22) aufweisen.

6. Aufzug nach Anspruch 5, bei dem der obere Haken (1) beweglich mit dem vollständigen Teil verbunden ist, das durch die Wiegevorrichtung (2) und den Halter (3) für den oberen Haken gebildet wird.

## Revendications

1. Dispositif de levage, comprenant un crochet supérieur (1) et un moyen de retenue (3) du crochet supérieur, **caractérisé en ce que** :
le dispositif de levage comprend en outre un dispositif de pesage (2) avec un affichage (23) pouvant indiquer le poids supporté par le crochet supérieur (1) ;
la première extrémité du dispositif de pesage (2) étant reliée au crochet supérieur (1), la deuxième extrémité du dispositif de pesage (2) étant reliée au moyen de retenue (3) du crochet supérieur.

2. Dispositif de levage selon la revendication 1, dans lequel le crochet supérieur (1) est relié de manière rotative à la première extrémité du dispositif de pesage (2), la deuxième extrémité du dispositif de pesage (2) étant reliée de manière rotative au moyen de retenue (3) du crochet supérieur.

3. Dispositif de levage selon la revendication 2, dans lequel le dispositif de pesage (2) comprend un logement creux (21), dans lequel est montée une unité de capteur de pesage, l'affichage (23) étant connecté électriquement à l'unité de capteur de pesage, le logement creux (21) comportant un trou d'installation pour l'affichage (23), une coque métallique recouvrant l'unité de capteur de pesage, la coque métallique et l'unité de capteur de pesage formant une pièce entière (22), comportant une partie de liaison inférieure (221) et une partie de liaison supérieure (223), la partie de liaison inférieure (221) comportant un premier trou de goupille (222), dans lequel une première goupille (31) est montée de manière mobile, les deux extrémités de la première goupille (31) étant fixées à l'intérieur du moyen de retenue (3) du crochet supérieur, la partie de liaison supérieure (223) comportant un deuxième trou de goupille (224), dans lequel la deuxième goupille (13) est montée de manière mobile, les deux extrémités de la deuxième goupille (13) étant fixées à l'intérieur d'une partie de liaison (12) du crochet supérieur (1).

4. Dispositif de levage selon la revendication 3, dans lequel la partie de liaison (12) du crochet supérieur (1) a une forme en U.

5. Dispositif de levage selon la revendication 1, dans lequel le dispositif de pesage (2) et le moyen de retenue (3) du crochet supérieur forment une pièce entière par l'intermédiaire de plaques anti-vibrations (7) montées sur le moyen de retenue (3), les plaques anti-vibrations (7) comportant un trou d'installation pour l'affichage (22).

6. Dispositif de levage selon la revendication 5, dans lequel le crochet supérieur (1) est relié de manière mobile à la pièce entière formée par le dispositif de pesage (2) et le moyen de retenue (3) du crochet supérieur.
